# EUROPEAN PATENT APPLICATION

(11) **EP 4 744 786 A1**
(43) Date of publication of application: **20.05.2026**
(21) Application number: 25822323.9
(22) Date of filing: 05.06.2025
(51) Int. Cl.: B05C 5/02, B05C 11/10, H01M 4/04, H01M 10/42

(54) **COATING APPARATUS**

(30) Priority: 10.06.2024 KR 20240074954
(71) Applicant: LG Energy Solution, Ltd., Seoul 07335 (KR)
(72) Inventor: KIM, Guk Tae, Daejeon 34122 (KR); KIM, Won Hwi, Daejeon 34122 (KR); KIM, Sang Min, Daejeon 34122 (KR); MOON, Young Gyu, Daejeon 34122 (KR)
(74) Representative: Plasseraud IP
(86) International application number: PCT/KR2025/007687
(87) International publication number: WO 2025/258914

(57) **Abstract**

A coating apparatus including a coating die is provided. The coating die includes a first die lip having a first discharge port for discharging a first coating liquid. The coating die further includes a second die lip having a second discharge port for discharging a second coating liquid. The first die lip includes a first guide lip and a second guide lip spaced apart from each other with the first discharge port therebetween. An end of the first guide lip is spaced apart from an end of the second die lip in a first direction which is a discharge direction of the first coating liquid.

## Description

### [Cross-Reference to Related Applications]

The present application is a national phase entry under 35 U.S.C. § 371 of International Application No. PCT/KR2025/007687 filed June 5, 2025, which claims priority from Korean Patent Application No. 10-2024-0074954 filed June 10, 2024, all of which are incorporated herein by reference.

### [Technical Field]

The present disclosure relates to a coating apparatus.

### [Background]

With the increasing development and demand for mobile apparatuses, the demand for secondary batteries as energy sources is rapidly growing. These secondary batteries include an electrode assembly. The electrode assembly has a form where a positive electrode, a separator, and a negative electrode are laminated at least once, and the positive electrode and negative electrode are manufactured by coating a coating liquid onto current collectors made of aluminum foil and copper foil, respectively. The coating liquid may include the electrode slurry (positive electrode active material slurry or negative electrode active material slurry) applied onto the current collector and/or an insulating liquid applied onto the current collector to cover both sides of the electrode slurry.

### [Brief Description]

### [Technical Problem]

The technical problem to be solved by the present disclosure is to provide a coating apparatus.

### [Technical Solution]

To solve the aforementioned problem, the technical concept of the present disclosure provides a coating apparatus including: a coating die including a first die lip having a first discharge port for discharging a first coating liquid and a second die lip having a second discharge port for discharging a second coating liquid, wherein the first die lip includes a first guide lip and a second guide lip spaced apart from each other with the first discharge port therebetween, and wherein an end of the first guide lip is spaced apart from an end of the second die lip in a first direction which is a discharge direction of the first coating liquid.

In aspects, the coating apparatus further includes a coating roll configured to support a substrate onto which the first coating liquid and the second coating liquid are applied, wherein a distance between the end of the first guide lip and the coating roll is different from a distance between the end of the second die lip and the coating roll.

In aspects, an end of the second guide lip is spaced apart from the end of the second die lip in the first direction.

In aspects, the second die lip protrudes in the first direction from the end of the first guide lip.

In aspects, the second die lip protrudes in the first direction from an end of the second guide lip.

In aspects, the end of the second die lip is aligned with an end of the second guide lip.

In aspects, the coating apparatus further includes a coating roll configured to transfer a substrate onto which the first coating liquid and the second coating liquid are applied, wherein the first guide lip and the second guide lip are sequentially disposed along a transfer direction of the substrate.

In aspects, the coating apparatus further includes a coating roll configured to transfer a substrate onto which the first coating liquid and the second coating liquid are applied, wherein the second guide lip and the first guide lip are sequentially disposed along a transfer direction of the substrate.

In aspects, the first guide lip protrudes in the first direction from the end of the second die lip.

In aspects, the second guide lip protrudes in the first direction from the end of the second die lip.

In aspects, an end of the second guide lip is aligned with the end of the second die lip.

In aspects, the coating apparatus further includes a coating roll configured to transfer a substrate onto which the first coating liquid and the second coating liquid are applied, wherein the first guide lip and the second guide lip are sequentially disposed along a transfer direction of the substrate.

In aspects, the coating apparatus further includes a coating roll configured to transfer a substrate onto which the first coating liquid and the second coating liquid are applied, wherein the second guide lip and the first guide lip are sequentially disposed along a transfer direction of the substrate.

In aspects, the first coating liquid is an insulating liquid, and the second coating liquid is an electrode slurry.

In aspects, the coating apparatus further includes a coating shim disposed within the coating die, wherein the coating shim includes: a first flow path communicating with the first discharge port and configured to convey the first coating liquid; and a second flow path communicating with the second discharge port and configured to convey the second coating liquid.

### [Advantageous Effects]

According to aspects of the present disclosure, the die lip of the coating die may include a first die lip having an insulating liquid discharge port and a second die lip having a slurry discharge port. By applying a step structure to the first die lip of the coating die, the thickness of the insulating liquid applied onto the substrate can be controlled independently from the thickness of the electrode slurry applied onto the substrate.

The effects that can be obtained from the aspects of the present disclosure are not limited to the effects mentioned above, and other effects not mentioned can be clearly derived and understood by one having ordinary knowledge in the technical field to which the aspects of the present disclosure belong from the following description. In other words, unintended effects of practicing the aspects of the present disclosure can also be derived from the aspects of the present disclosure by one having ordinary knowledge in the technical field.

### [Brief Description of the Drawings]

FIG. 1 is a perspective view showing a coating apparatus according to aspects of the present disclosure.
FIG. 2 is an enlarged view showing the area indicated by "II" in FIG. 1.
FIG. 3 is an exploded perspective view showing the coating apparatus according to aspects of the present disclosure.
FIG. 4 is a cross-sectional view showing a coating apparatus according to aspects of the present disclosure.
FIG. 5 is a cross-sectional view of the coating apparatus taken along line V-V' of FIG. 4.
FIG. 6 is a cross-sectional view showing a portion of the coating apparatus according to aspects of the present disclosure.
FIG. 7 is a cross-sectional view showing a portion of the coating apparatus according to aspects of the present disclosure.
FIG. 8 is a cross-sectional view showing a coating apparatus according to aspects of the present disclosure.
FIG. 9 is a cross-sectional view of the coating apparatus taken along line IX-IX' of FIG. 8.
FIG. 10 is a cross-sectional view showing a coating apparatus according to aspects of the present disclosure.
FIG. 11 is a cross-sectional view showing a coating apparatus according to aspects of the present disclosure.

### [Detailed Description]

Hereinafter, preferred aspects of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the aspects described herein and the configurations shown in the drawings are only the most preferred aspects of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the aspects of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First aspect)

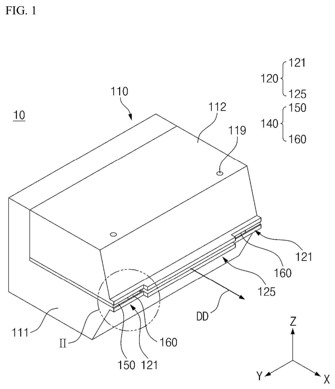

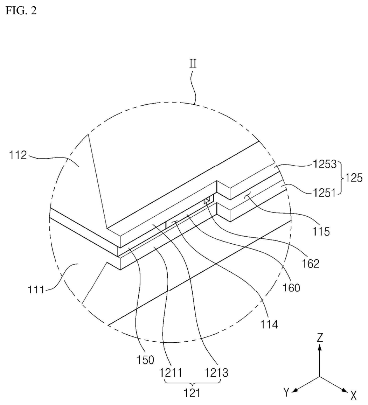

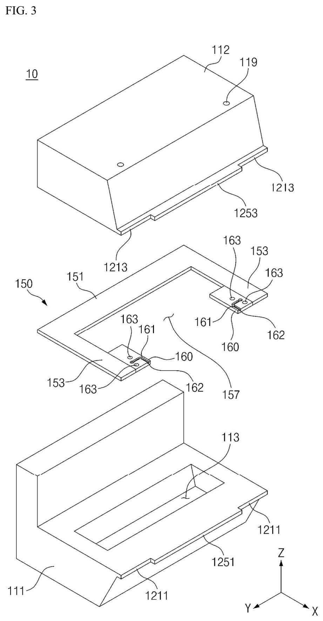

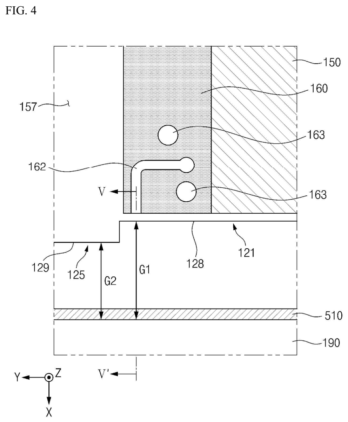

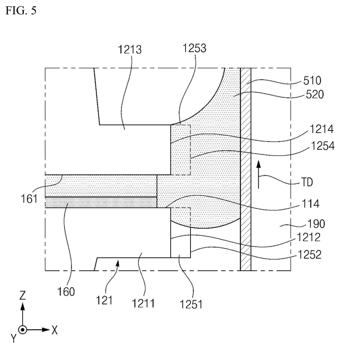

FIG. 1 is a perspective view showing a coating apparatus 10 according to aspects of the present disclosure. FIG. 2 is an enlarged view showing the region indicated by "II" in FIG. 1. FIG. 3 is an exploded perspective view of the coating apparatus 10 according to aspects of the present disclosure. FIG. 4 is a cross-sectional view of the coating apparatus 10 according to aspects of the present disclosure. FIG. 5 is a cross-sectional view of the coating apparatus 10 taken along line V-V' in FIG. 4.

Referring to FIGS. 1 through 5, the coating apparatus 10 can perform a coating process to manufacture electrodes for secondary batteries by applying a coating liquid onto a substrate 510. The coating liquid may include an electrode slurry and an insulating liquid 520. The coating apparatus 10 can discharge the electrode slurry and insulating liquid 520 toward the substrate 510 moving by the coating roll 190. The electrode slurry applied onto the substrate 510 becomes an electrode slurry layer, and the insulating liquid 520 applied onto the substrate 510 may become an insulating layer covering the side parts of the electrode slurry layer. In this disclosure, the insulating liquid 520 may be referred to as a first coating liquid, and the electrode slurry may be referred to as a second coating liquid. Alternatively, the insulating liquid 520 may be referred to as a second coating liquid, and the electrode slurry may be referred to as a first coating liquid.

The substrate 510 may be a current collector. The current collector may be a positive electrode current collector. For example, the positive electrode current collector may include stainless steel, aluminum, nickel, titanium, baked carbon, etc. The current collector may be a negative electrode current collector. For example, the negative electrode current collector may include copper, stainless steel, nickel, titanium, baked carbon, etc.

The electrode slurry may include an electrode active material, a conductive material, a binder, and additives. The electrode active material may include a positive electrode active material or a negative electrode active material. For example, the positive electrode active material may include a lithium metal composite oxide containing nickel (Ni), cobalt (Co), and manganese (Mn). For example, the negative electrode active material may include one or more of a carbon material and a silicon material. The carbon material may refer to a carbon material having carbon atoms as its main component. The silicon material may be a particle containing silicon (Si) as its main component among metal components, and may include one or more of silicon (Si) particles and silicon oxide particles.

The insulating liquid 520 may include inorganic particles, phenolic compounds, and a binder. For example, the inorganic particles may include one or more aluminum minerals selected from boehmite, gibbsite, diaspore, alunite, and nepheline. For example, the phenolic compounds may enhance the dispersibility of the inorganic particles contained in the insulating liquid 520. Such phenolic compounds include one or more of tannic acid, baicalein, luteolin, taxifolin, myricetin, quercetin, rutin, catechin, epigallocatechin gallate, butein, piceatannol, pyrogallic acid, ellagic acid, amylose, amylopectin, and xanthan gum.

In aspects, the coating apparatus 10 may be configured to simultaneously apply an electrode slurry and an insulating liquid 520 onto one surface of the substrate 510. The insulating liquid 520 may be applied onto the substrate 510 to cover both sides of the electrode slurry layer applied onto the substrate 510. The insulating liquid 520, applied to the substrate 510 to cover both sides of the electrode slurry layer, can suppress or prevent a sliding phenomenon where the thickness of the electrode slurry layer gradually decreases at its outer periphery, and can reduce thickness deviations in the electrode slurry layer applied to the substrate 510.

The coating apparatus 10 may include a coating die 110, a coating shim 140, and a coating roll 190.

The coating die 110 can receive the insulating liquid 520 and the electrode slurry from the outside. The coating die 110 can discharge the insulating liquid 520 and the electrode slurry toward the substrate 510. The coating die 110 may include an insulating liquid discharge port 114 configured to discharge the insulating liquid 520 and a slurry discharge port 115 configured to discharge the electrode slurry. The insulating liquid discharge port 114 and the slurry discharge port 115 of the coating die 110 may be provided on the die lip 120 of the coating die 110 facing the substrate 510 conveyed by the coating roll 190.

Hereinafter, a first direction (e.g., X-direction) is defined as a direction parallel to the discharge direction DD of the electrode slurry and/or insulating liquid 520, a second direction (e.g., Y-direction) is defined as a direction perpendicular to the discharge direction DD of the electrode slurry and/or insulating liquid 520, and a third direction (e.g., Z-direction) is defined as a direction perpendicular to both the first direction (e.g., X-direction) and the second direction (e.g., Y-direction).

The insulating liquid discharge port 114 of the coating die 110 may have a slit shape extending in a second direction (e.g., Y-direction). The length of the insulating liquid discharge port 114 of the coating die 110 along the second direction (e.g., Y-direction) may be greater than the length of the insulating liquid discharge port 114 of the coating die 110 along the third direction (e.g., Z-direction).

The slurry discharge port 115 of the coating die 110 may have a slit shape extending in a second direction (e.g., Y-direction). The length of the slurry discharge port 115 of the coating die 110 along the second direction (e.g., Y-direction) may be greater than the length of the slurry discharge port 115 of the coating die 110 along the third direction (e.g., Z-direction).

In aspects, the coating die 110 may include a plurality of insulating liquid discharge ports 114 spaced apart in the second direction (e.g., Y-direction), and the slurry discharge port 115 may be disposed between the plurality of insulating liquid discharge ports 114.

The die lip 120 of the coating die 110 may include a first die lip 121 provided with the insulating liquid discharge ports 114. The first die lip 121 may include a first guide lip 1211 and a second guide lip 1213 spaced apart from each other with the insulating liquid discharge port 114 therebetween. The first guide lip 1211 and the second guide lip 1213 may be sequentially disposed along the transfer direction TD of the substrate 510 transferred by the coating roll 190.

The die lip 120 of the coating die 110 may include a second die lip 125 provided with a slurry discharge port 115. The second die lip 125 may include a third guide lip 1251 and a fourth guide lip 1253 spaced apart from each other with the slurry discharge port 115 therebetween. For example, the third guide lip 1251 and the fourth guide lip 1253 may be sequentially disposed along the transfer direction TD of the substrate 510 transferred by the coating roll 190.

The coating die 110 may include a first block 111 and a second block 112. The first block 111 may include a manifold 113 for accommodating the electrode slurry. The manifold 113 may include a space for accommodating externally supplied electrode slurry. The second block 112 may be coupled to the first block 111 to cover the manifold 113 of the first block 111.

A first guide lip 1211 of the first die lip 121 may be provided at an end part of the first block 111 facing the substrate 510, and a second guide lip 1213 of the first die lip 121 may be provided at an end part of the second block 112 facing the substrate 510. A third guide lip 1251 of the second die lip 125 may be provided at an end part of the first block 111 facing the substrate 510, and a fourth guide lip 1253 of the second die lip 125 may be provided at an end part of the second block 112 facing the substrate 510. At the end part of the first block 111, the first guide lip 1211 of the first die lip 121 and the third guide lip 1251 of the second die lip 125 may be adjacent in a second direction (e.g., Y-direction). At the end part of the second block 112, the second guide lip 1213 of the first die lip 121 and the fourth guide lip 1253 of the second die lip 125 may be adjacent in a second direction (e.g., Y-direction).

A coating shim 140 may be disposed within the coating die 110. The coating shim 140 may be inserted into a space provided between the first block 111 and the second block 112. The coating shim 140 may provide an electrode slurry flow path 157 extending in a first direction (e.g., X-direction) from the manifold 113 of the coating die 110 to the slurry discharge port 115 of the coating die 110. The electrode slurry flow path 157 may convey electrode slurry from the manifold 113 of the coating die 110 to the slurry discharge port 115 of the coating die 110.

The coating shim 140 may include a body shim 150 and a spacer shim 160.

The body shim 150 may be fastened to at least one of the first block 111 and the second block 112 by a fastening member such as a bolt. The body shim 150 may include a center body 151 and a pair of side bodies 153. The center body 151 may be spaced apart from the slurry discharge port 115 of the coating die 110 in a first direction (e.g., X-direction) with the manifold 113 in between, and may extend in a second direction (e.g., Y-direction) along one edge of the manifold 113. A pair of side bodies 153 may be spaced apart in a second direction (e.g., Y-direction) with the manifold 113 in between. One of the pair of side bodies 153 may be connected to one end of the center body 151 and may extend in a first direction (e.g., X-direction) from the center body 151 toward a first die lip 121 of the coating die 110. The other of the pair of side bodies 153 may be connected to the other end of the center body 151 and may extend from the center body 151 toward the first die lip 121 of the coating die 110 in a first direction (e.g., X-direction).

The spacer shim 160 may be fastened to at least one of the first block 111 and the second block 112 by a fastening member such as a bolt. The spacer shim 160 may include at least one hole 163 into which the fastening member is inserted. The fastening member may be inserted into and fastened to a hole in the first block 111 that communicates with the hole 163 in the spacer shim 160, thereby fastening the spacer shim 160 to the first block 111. The spacer shim 160 may include an insulating liquid flow path 161 configured to convey insulating liquid 520 and a discharge port 162 at the end of the insulating liquid flow path 161. The second block 112 of the coating die 110 may have a flow path 119 communicating with the insulating liquid flow path 161 of the spacer shim 160. The insulating liquid 520 may flow through the flow path 119 of the second block 112, the insulating liquid flow path 161 of the spacer shim 160, the discharge port 162 of the spacer shim 160, and the insulating liquid discharge port 114 of the coating die 110, before being discharged outside the coating die 110. The spacer shim 160 may be disposed between the manifold 113 and the first die lip 121 of the coating die 110. The spacer shim 160 may define the width of the electrode slurry flow path 157 of the coating shim 140 in a second direction (e.g., Y-direction) and the width of the slurry discharge port 115 of the coating die 110 in a second direction (e.g., Y-direction).

The coating shim 140 may include a plurality of spacer shims 160 mounted in the coating die 110. The plurality of spacer shims 160 may be spaced apart from each other in the second direction (e.g., Y-direction). In aspects, spacer shims 160 may be respectively disposed at both sides of the slurry discharge port 115 of the coating die 110 or the electrode slurry flow path 157. In aspects, one of the plurality of spacer shims 160 may be connected to one side of one of a pair of side bodies 153, and another of the plurality of spacer shims 160 may be connected to one side of the other of the pair of side bodies 153.

In aspects, the die lip 120 of the coating die 110 may have a step structure to adjust the coating gap associated with the thickness of the electrode slurry applied onto the substrate 510 and/or the coating gap associated with the thickness of the insulating liquid 520 applied onto the substrate 510.

In aspects, a step structure may be applied to a first die lip 121 of the coating die 110 provided with an insulating liquid discharge port 114, whereby the coating gap associated with the thickness of the insulating liquid 520 applied onto the substrate 510 may be controlled by the step structure on the first die lip 121 of the coating die 110. As a result of applying the step structure to the first die lip 121 of the coating die 110, the end 128 of the first die lip 121 of the coating die 110 and the end 129 of the second die lip 125 of the coating die 110 can be spaced apart in a first direction(e.g., X-direction), and the distance G1 between the end 128 of the first die lip 121 of the coating die 110 and the coating roll 190 may differ from the distance G2 between the end 129 of the second die lip 125 of the coating die 110 and the coating roll 190. In aspects, the distance between the end 128 of the first die lip 121 of the coating die 110 and the end 129 of the second die lip 125 of the coating die 110 may be greater than 0 micrometers and less than or equal to 200 micrometers.

In aspects, the starting point of the step structure of the first die lip 121 (i.e., the boundary between the first die lip 121 and the second die lip 125) may not overlap the spacer shim 160 in a first direction (e.g., X-direction). In other aspects, the starting point of the step structure of the first die lip 121 may overlap the spacer shim 160 in a first direction (e.g., X-direction), but may not overlap the discharge port 162 of the spacer shim 160 in the first direction (e.g., X-direction). In other words, the starting point of the step structure of the first die lip 121 may overlap in the first direction (e.g., X-direction) with the area of the spacer shim 160 located between the edge of the spacer shim 160 contacting the electrode slurry flow path 157 and the discharge port 162 of the spacer shim 160.

In aspects, a step structure may be applied to at least one of the first guide lip 1211 and the second guide lip 1213 of the first die lip 121. In aspects, a step structure may be applied to the first guide lip 1211 of the first die lip 121. As a result of applying the step structure to the first guide lip 1211 of the first die lip 121, the end 1212 of the first guide lip 1211 of the first die lip 121 and the end 1252 of the third guide lip 1251 of the second die lip 125 may be spaced apart in a first direction (e.g., X-direction), and the distance between the end 1212 of the first guide lip 1211 of the first die lip 121 and the coating roll 190 may differ from the distance between the end 1252 of the third guide lip 1251 of the second die lip 125 and the coating roll 190. In aspects, a step structure may be applied to the second guide lip 1213 of the first die lip 121. As a result of applying the step structure to the second guide lip 1213 of the first die lip 121, the end 1214 of the second guide lip 1213 of the first die lip 121 and the end 1254 of the fourth guide lip 1253 of the second die lip 125 may be spaced apart in a first direction (e.g., X-direction), and the distance between the end 1214 of the second guide lip 1213 of the first die lip 121 and the coating roll 190 may differ from the distance between the end 1254 of the fourth guide lip 1253 of the second die lip 125 and the coating roll 190. In aspects, both the first guide lip 1211 and the second guide lip 1213 of the first die lip 121 may have a step structure, and the end 1212 of the first guide lip 1211 may be aligned with the end 1214 of the second guide lip 1213 in a vertical direction.

In aspects, the second die lip 125 may protrude in a first direction (e.g., X-direction) from the end 128 of the first die lip 121, and the distance G1 between the first die lip 121 and the coating roll 190 may be greater than the distance G2 between the second die lip 125 and the coating roll 190. In this case, each of the first guide lip 1211 and the second guide lip 1213 of the first die lip 121 may have a step structure, and the third guide lip 1251 of the second die lip 125 may protrude from the first guide lip 1211 of the first die lip 121 in the first direction (e.g., X-direction), and the fourth guide lip 1253 of the second die lip 125 may protrude from the second guide lip 1213 of the first die lip 121 in the first direction (e.g., X-direction).

In the coating apparatus according to the comparative example, the distance between the die lip of the coating die and the coating roll is uniformly constant overall, and the distance between the die lip of the coating die and the coating roll can be set to a value for adjusting the thickness of the electrode slurry. In this case, the distance between the insulating liquid discharge port of the coating die and the coating roll is the same as the distance between the slurry discharge port of the coating die and the coating roll, making it difficult to control the thickness of the insulating liquid independently from the thickness of the electrode slurry.

According to aspects, the distance between the end 128 of the first die lip 121 of the coating die 110 provided with the insulating liquid discharge port 114 and the coating roll 190 is set greater than the distance between the end 129 of the second die lip 125 of the coating die 110 provided with the slurry discharge port 115 and the coating roll 190, so compared to when the entire end 128 of the first die lip 121 of the coating die 110 is aligned with the end 129 of the second die lip 125 of the coating die 110, the thickness of the insulating liquid 520 applied onto the substrate 510 can be increased.

### (Second aspect)

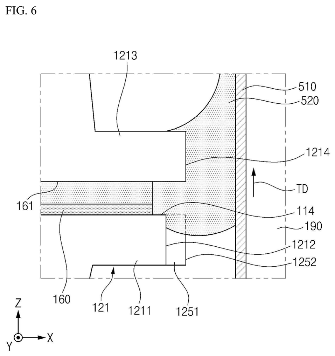

FIG. 6 is a cross-sectional view showing a portion of a coating apparatus according to aspects of the present disclosure. Herein, the coating apparatus shown in FIG. 6 will be described, focusing on the differences from the coating apparatus 10 described with reference to FIGS. 1 through 5.

Referring to FIG. 6, the first guide lip 1211 of the first die lip 121 may have a step structure, and the distance between the end 1212 of the first guide lip 1211 of the first die lip 121 and the coating roll 190 may be greater than the distance between the end (129 in FIG. 4) of the second die lip (125 in FIG. 4) and the coating roll 190, or the distance between the end 1252 of the third guide lip 1251 and the coating roll 190. The second die lip 125 or the third guide lip 1251 may protrude in a first direction (e.g., X-direction) from the end 1212 of the first guide lip 1211 of the first die lip 121. The end 1214 of the second guide lip 1213 of the first die lip 121 may be aligned with the end 129 of the second die lip 125 or the end (1254 in FIG. 5) of the fourth guide lip (1253 in FIG. 5) of the second die lip 125.

According to aspects, the distance between the end 1212 of the first guide lip 1211 of the first die lip 121 of the coating die 110 provided with an insulating liquid discharge port 114 and the coating roll 190 is set larger than the distance between the end 129 of the second die lip 125 of the coating die 110 provided with the slurry discharge port 115 and the coating roll 190, so the thickness of the insulating liquid 520 applied onto the substrate 510 can be increased compared to when the entire end 128 of the first die lip 121 of the coating die 110 is aligned with the end 129 of the second die lip 125 of the coating die 110.

### (Third aspect)

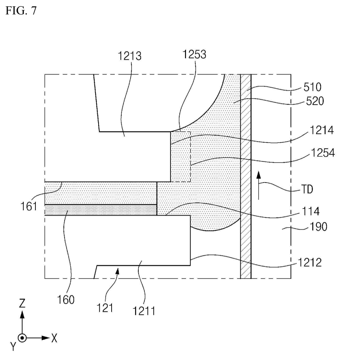

FIG. 7 is a cross-sectional view showing a portion of a coating apparatus according to aspects of the present disclosure. Herein, the coating apparatus shown in FIG. 7 will be described, focusing on the differences from the coating apparatus 10 described with reference to FIGS. 1 through 5.

Referring to FIG. 7, the second guide lip 1213 of the first die lip 121 may have a step structure, and the distance between the end 1214 of the second guide lip 1213 of the first die lip 121 and the coating roll 190 may be greater than the distance between the end (129 in FIG. 4) of the second die lip (125 in FIG. 4) and the coating roll 190, or the distance between the end 1254 of the fourth guide lip 1253 and the coating roll 190. The second die lip 125 or the fourth guide lip 1253 may protrude in a first direction (e.g., X-direction) from the end 1214 of the second guide lip 1213 of the first die lip 121. The end 1212 of the first guide lip 1211 of the first die lip 121 may be aligned with the end 129 of the second die lip 125 or the end (1252 in FIG. 5) of the third guide lip (1251 in FIG. 5).

According to aspects, the distance between the end 1214 of the second guide lip 1213 of the first die lip 121 of the coating die 110 provided with an insulating liquid discharge port 114 and the coating roll 190 is set larger than the distance between the end 129 of the second die lip 125 of the coating die 110 provided with the slurry discharge port 115 and the coating roll 190, so the thickness of the insulating liquid 520 applied onto the substrate 510 can be increased compared to when the entire end 128 of the first die lip 121 of the coating die 110 is aligned with the end 129 of the second die lip 125 of the coating die 110.

### (Fourth aspect)

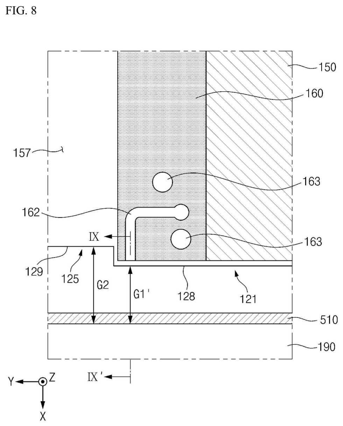

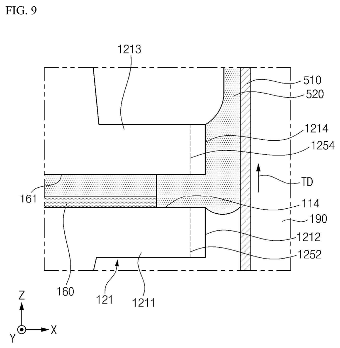

FIG. 8 is a cross-sectional view showing a coating apparatus according to aspects of the present disclosure. FIG. 9 is a cross-sectional view of the coating apparatus taken along line IX-IX' of FIG. 8. Hereinafter, the coating apparatus shown in FIGS. 8 and 9 will be described, focusing on the differences from the coating apparatus 10 described with reference to FIGS. 1 to 5.

Referring to FIGS. 8 and 9, the first die lip 121 may protrude in a first direction (e.g., X-direction) from the end 129 of the second die lip 125, and the distance G1' between the first die lip 121 and the coating roll 190 may be smaller than the distance G2 between the second die lip 125 and the coating roll 190. Each of the first guide lip 1211 and the second guide lip 1213 of the first die lip 121 may have a step structure formed by protruding in a first direction (e.g., X direction) from the end 129 of the second die lip 125.

According to aspects, the distance between the end 128 of the first die lip 121 of the coating die 110 provided with an insulating liquid discharge port 114 and the coating roll 190 is set to be smaller than the distance between the end 129 of the second die lip 125 of the coating die 110 provided with a slurry discharge port 115 and the coating roll 190, so compared to when the entire end 128 of the first die lip 121 of the coating die 110 is aligned with the end 129 of the second die lip 125 of the coating die 110, the thickness of the insulating liquid 520 applied onto the substrate 510 can be reduced.

### (Fifth aspect)

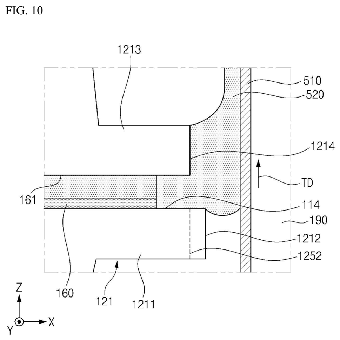

FIG. 10 is a cross-sectional view illustrating a coating apparatus according to aspects of the present disclosure. Herein, the coating apparatus shown in FIG. 10 will be described, focusing on the differences from the coating apparatus described with reference to FIGS. 8 and 9.

Referring to FIG. 10, the first guide lip 1211 of the first die lip 121 may have a step structure formed by protruding in a first direction (e.g., X-direction) from the end (129 in FIG. 8) of the second die lip (125 in FIG. 8) or the end 1252 of the third guide lip (1251 in FIG. 5). The distance between the end 1212 of the first guide lip 1211 of the first die lip 121 and the coating roll 190 may be smaller than the distance between the end 129 of the second die lip 125 and the coating roll 190 or the distance between the end 1252 of the third guide lip 1251 and the coating roll 190. The end 1214 of the second guide lip 1213 of the first die lip 121 may be aligned with the end 129 of the second die lip 125 or the end (1254 in FIG. 5) of the fourth guide lip (1253 in FIG. 5).

According to aspects, the distance between the end 1212 of the first guide lip 1211 of the first die lip 121 of the coating die 110 provided with an insulating liquid discharge port 114 and the coating roll 190 is set smaller than the distance between the end 129 of the second die lip 125 of the coating die 110 provided with the slurry discharge port 115 and the coating roll 190, so the thickness of the insulating liquid 520 applied onto the substrate 510 can be reduced compared to when the entire end 128 of the first die lip 121 of the coating die 110 is aligned with the end 129 of the second die lip 125 of the coating die 110.

### (Sixth aspect)

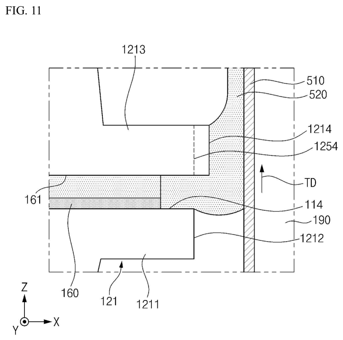

FIG. 11 is a cross-sectional view illustrating a coating apparatus according to aspects of the present disclosure. Herein, the coating apparatus shown in FIG. 11 will be described, focusing on the differences from the coating apparatus described with reference to FIGS. 8 and 9.

Referring to FIG. 11, the second guide lip 1213 of the first die lip 121 may have a step structure formed by protruding in a first direction (e.g., X-direction) from the end (129 in FIG. 8) of the second die lip (125 in FIG. 8) or the end 1254 of the fourth guide lip (1253 in FIG. 5). The distance between the end 1214 of the second guide lip 1213 of the first die lip 121 and the coating roll 190 may be smaller than the distance between the end 129 of the second die lip 125 and the coating roll 190 or the distance between the end 1254 of the fourth guide lip 1253 and the coating roll 190. The end 1212 of the first guide lip 1211 of the first die lip 121 may be aligned with the end 129 of the second die lip 125 or the end (1252 in FIG. 5) of the third guide lip (1251 in FIG. 5).

According to aspects, the distance between the end 1214 of the second guide lip 1213 of the first die lip 121 of the coating die 110 provided with an insulating liquid discharge port 114 and the coating roll 190 is set smaller than the distance between the end 129 of the second die lip 125 of the coating die 110 provided with the slurry discharge port 115 and the coating roll 190, so the thickness of the insulating liquid 520 applied onto the substrate 510 can be reduced compared to when the entire end 128 of the first die lip 121 of the coating die 110 is aligned with the end 129 of the second die lip 125 of the coating die 110.

According to aspects of the present disclosure, the die lip 120 of the coating die 110 may include a first die lip 121 having an insulating liquid discharge port 114 and a second die lip 125 having a slurry discharge port 115, and by applying a step structure to the first die lip 121 of the coating die 110, the thickness of the insulating liquid 520 applied onto the substrate 510 can be controlled independently from the thickness of the electrode slurry applied onto the substrate 510.

The present disclosure has been described in detail above with reference to the drawings and aspects. However, the configurations described in the drawings or aspects of the present specification are merely one aspect of the present disclosure and do not represent all of the technical ideas of the present disclosure. Therefore, it should be understood that various equivalents and modifications may be made to the present disclosure at the time of filing this application.

## Claims

1. A coating apparatus comprising:
a coating die including a first die lip having a first discharge port configured to discharge a first coating liquid and a second die lip having a second discharge port configured to discharge a second coating liquid,
wherein the first die lip includes a first guide lip and a second guide lip, the second guide lip being spaced apart from the first guide lip, the first discharge port being positioned between the first guide lip and the second guide lip, and
wherein an end of the first guide lip is spaced apart from an end of the second die lip in a first direction which is a discharge direction of the first coating liquid.

2. The coating apparatus of claim 1, further comprising:
a coating roll configured to support a substrate onto which the first coating liquid and the second coating liquid are applied, wherein
a distance between the end of the first guide lip and the coating roll is not equal to a distance between the end of the second die lip and the coating roll.

3. The coating apparatus of claim 1, wherein
an end of the second guide lip is spaced apart from the end of the second die lip in the first direction.

4. The coating apparatus of claim 1, wherein
the second die lip protrudes in the first direction from the end of the first guide lip.

5. The coating apparatus of claim 4, wherein
the second die lip protrudes in the first direction from an end of the second guide lip.

6. The coating apparatus of claim 4, wherein
the end of the second die lip is aligned with an end of the second guide lip.

7. The coating apparatus of claim 6, further comprising:
a coating roll configured to transfer a substrate onto which the first coating liquid and the second coating liquid are applied, wherein
the first guide lip is upstream of the second guide lip in a transfer direction of the substrate.

8. The coating apparatus of claim 6, further comprising:
a coating roll configured to transfer a substrate onto which the first coating liquid and the second coating liquid are applied, wherein
the second guide lip is upstream of the first guide lip in a transfer direction of the substrate.

9. The coating apparatus of claim 1, wherein
the first guide lip protrudes in the first direction from the end of the second die lip.

10. The coating apparatus of claim 9, wherein
the second guide lip protrudes in the first direction from the end of the second die lip.

11. The coating apparatus of claim 9, wherein
an end of the second guide lip is aligned with the end of the second die lip.

12. The coating apparatus of claim 11, further comprising:
a coating roll configured to transfer a substrate onto which the first coating liquid and the second coating liquid are applied, wherein
the first guide lip is upstream of the second guide lip in a transfer direction of the substrate.

13. The coating apparatus of claim 11, further comprising:
a coating roll configured to transfer a substrate onto which the first coating liquid and the second coating liquid are applied, wherein
the second guide lip is upstream of the first guide lip in a transfer direction of the substrate.

14. The coating apparatus of claim 1, wherein
the first coating liquid is an insulating liquid, and
the second coating liquid is an electrode slurry.

15. The coating apparatus of claim 1, further comprising:
a coating shim disposed within the coating die, wherein the coating shim includes:
a first flow path in communication with the first discharge port and configured to convey the first coating liquid; and
a second flow path in communication with the second discharge port and configured to convey the second coating liquid.
